# EUROPÄISCHE PATENTSCHRIFT

(11) **EP 2 606 958 B1**
(45) Veröffentlichungstag und Bekanntmachung des Hinweises auf die Patenterteilung: **25.05.2016**
(21) Anmeldenummer: 11194440.1
(22) Anmeldetag: 20.12.2011
(51) Int. Cl.: B01J 8/00, C10K 1/02, C10J 3/46, B01D 45/08

(54) **REAKTOR UND VERFAHREN ZUR HERSTELLUNG VON SYNTHESEGAS**
METHOD AND REACTOR FOR PRODUCING SYNTHETIC GAS
RÉACTEUR ET PROCÉDÉ DE FABRICATION DE GAZ DE SYNTHÈSE

(43) Veröffentlichungstag der Anmeldung: 26.06.2013
(73) Patentinhaber: Tetzlaff, Karl-Heinz, 65779 Kelkheim (DE)
(72) Erfinder: Tetzlaff, Karl-Heinz, 65779 Kelkheim (DE)
(74) Vertreter: Cohausz & Florack

(56) Entgegenhaltungen:
- EP-A2- 1 312 662
- DE-A1- 3 310 200
- DE-A1-102008 032 166
- US-A- 2 728 632
- US-A- 4 823 712
- US-A- 4 888 158
- US-A- 5 809 940
- US-A1- 2009 235 848

## Beschreibung

Die Erfindung betrifft einen Reaktor zur Herstellung von Synthesegas aus gasförmigen Kohlenwasserstoffen, insbesondere Pyrolysegas, und Kokspartikeln, umfassend wenigstens einen Reaktionsraum. Ferner betrifft die Erfindung ein Verfahren zur Herstellung von Synthesegas aus gasförmigen Kohlenwasserstoffen, insbesondere Pyrolysegas, und Kokspartikeln.

Reaktoren zur Herstellung von Synthesegas, etwa aus Biomasse, worunter insbesondere alle nachwachsenden, pflanzlichen Materialien verstanden werden können, sind in verschiedenen Ausgestaltungen bekannt. So ist beispielswiese aus der DE 10 2008 032 A1 ein Reaktor und ein Verfahren zur Herstellung von Synthesegas bekannt, von dem die Erfindung ausgeht. Ein weiterer Reaktor zur Herstellung von Synthesegas wird in der US 2,728,632 A beschrieben.

Aus der Patentschrift US 4,843,712 ist ein Reaktor zur Herstellung von Synthesegas in einem Wirbelbett bekannt.

Bei der Synthesegasherstellung von festen Biomassen wird diese zunächst bei hohen Temperaturen unter Freisetzung von Pyrolysegas zu Koks umgesetzt. Dieser Prozess wird Pyrolyse genannt. Der Koks kann anschließend in Form von feinen Partikeln zur weiteren Umsetzung zu Synthesegas genutzt werden. Dabei dienen die Kokspartikel nicht zuletzt der katalytischen Umsetzung von im Pyrolysegas enthaltenen Teeren. Die Kokspartikel enthalten neben Kohlenstoff noch anorganische Komponenten, die als Asche bezeichnet werden und nach vollständiger Umsetzung des Kohlenstoffanteils der Kokspartikel zurückbleiben. Die Asche fällt in Form von feinen Aschepartikeln an und wird nach Verlassen des Reaktors mittels Zyklonen vom Synthesegas getrennt.

Problematisch ist bei den bekannten Verfahren, dass neben den Aschepartikeln auch Kokspartikel aus dem Reaktor ausgetragen werden, die dann für eine katalytische Spaltung von Teeren und eine weitere Umsetzung nicht mehr zur Verfügung stehen. Um die Verweilzeit der Kokspartikel zu erhöhen, können die Reaktorvolumen deutlich gesteigert werden. Dies führt jedoch zu einem erheblichen Anstieg der Apparatekosten.

Daher liegt der vorliegenden Erfindung die Aufgabe zugrunde, den Reaktor und das Verfahren der jeweils eingangs genannten Art derart auszugestalten und weiterzubilden, dass der Trennschnitt zwischen den abgeschiedenen und nicht abgeschiedenen Partikeln gezielt beeinflusst werden kann. Diese Aufgabe wird durch einen Reaktor nach Anspruch 1 und ein Verfahren nach Anspruch 10 gelöst.

Die Erfindung hat also erkannt, dass sehr einfach und kostengünstig eine Klassierung von Kokspartikeln und Aschepartikeln erreicht werden kann. Die Partikel werden mit dem Gasstrom in die Einbauten getragen. Die noch einen nennenswerten Kohlenstoffanteil aufweisenden Kokspartikel werden in den Einbauten abgeschieden und zurück in den Reaktionsraum geführt. Die nur noch geringe Kohlenstoffanteile aufweisenden Kokspartikel und reine Aschepartikel werden mit dem Gas abgeführt.

Diese Trennung beruht auf den unterschiedlichen Sedimentationseigenschaften von Kokspartikeln und Aschepartikel. Lässt man Unterschiede hinsichtlich der äußeren Form außer Betracht, sedimentiert ein Partikel in Schwerkraftrichtung umso besser, je höher dessen Schwerkraft und je geringer dessen Strömungswiderstand ist. Mit anderen Worten sedimentieren kleine, schwere Partikel leichter als große, leichte Partikel.

Partikel mit einem hohen Kohlenstoffanteil (Kokspartikel) sind grundsätzlich größer und schwerer als Partikel mit einem geringen Kohlenstoffanteil (Aschepartikel). Die Partikel mit einem hohen Kohlenstoffanteil sedimentieren grundsätzlich leichter, weisen also eine größere Sinkgeschwindigkeit auf bzw. neigen eher zum Absetzen, als Partikel mit einem geringen Kohlenstoffanteil. Dies wird in den Strömungskanälen der Einbauten zur Trennung der Partikel ausgenutzt. Die Kokspartikel weisen vorzugsweise einen Durchmesser zwischen 0,01 mm bis 30 mm, vorzugsweise zwischen 0,2 mm bis 3 mm auf. Man spricht bei diesen Partikelgrößen auch von Koksstaub.

Durch Bereitstellen von geneigten Strömungskanälen für die Mehrphasenströmung aus Gasen einerseits und Kokspartikel sowie Aschepartikel andererseits kann verfahrensmäßig einfach und kostengünstig für eine Rückführung der noch nicht hinreichend umgesetzten Kokspartikel gesorgt werden. Die Verweilzeit der Kokspartikel im Reaktionsraum wird so wesentlich erhöht und trotzdem der Austrag von Aschepartikel aus dem Reaktionsraum aufrechterhalten, so dass sich die Aschepartikel nicht im Reaktionsraum ansammeln.

Ein weiterer Vorteil liegt darin, dass die Verweilzeit erfindungsgemäß abhängig von den Kokspartikelgrößen ist. Große Kokspartikel verbleiben länger im Reaktionsraum als kleine Kokspartikel, da die großen Kokspartikel mehr Zeit benötigen, bis sie abreagiert und im Wesentlichen zu Aschepartikeln umgesetzt sind.

Günstig ist es dabei, wenn der Reaktionsraum von der Mehrphasenströmung ungefähr von unten nach oben und/oder ungefähr vertikal durchströmt wird. Die Strömung in den Strömungskanälen der Einbauten ist dann horizontaler, wodurch die Partikelabscheidung und Partikelrückführung hervorgerufen wird. Begünstigend kann eine Reduzierung der Strömungsgeschwindigkeit, etwa infolge einer Erweiterung des Strömungsquerschnitts, hinzukommen.

Im Reaktionsraum ist die Mehrphasenströmung vorzugsweise turbulent, um eine gute Rückvermischung zu erhalten, so dass abgeschiedene und in den Reaktionsraum zurückgeführte Kokspartikel nicht sofort wieder in die Strömungskanäle der Einbauten getragen werden. Andernfalls könnten die Einbauten überlastet werden und/oder es könnte kein scharfer Trennschnitt zwischen schwerer und leichter sedimentierenden Partikeln, also z.B. Kokspartikeln und Aschepartikeln, erreicht werden.

In den geneigten Strömungskanälen weist die Schwerkraftrichtung so weit von der Strömungsrichtung ab, dass sich die größeren und schwereren Kokspartikel am Boden der Strömungskanäle absetzen, wo die Strömungsgeschwindigkeit reibungsbedingt gegenüber dem Zentrum der Strömungskanäle herabgesetzt ist. Daher können die Kokspartikel getrieben durch die Schwerkraft entlang des Bodens der Strömungskanäle zurück in den Reaktionsraum rutschen.

Für die Abscheidung der Kokspartikel ist es günstig, wenn die Strömung in den Strömungskanälen wenigstens im Wesentlichen laminar ausgebildet ist. Für eine hohe Trennleistung sollten hinreichend viele Strömungskanäle vorgesehen sein.

Bevorzugte Ausgestaltungen des Reaktors und des Verfahrens zur Synthesegasherstellung aus gasförmigen Kohlenwasserstoffen werden nachfolgend gemeinsam beschrieben, ohne stets im Einzelnen zwischen den konstruktiven Vorrichtungsmerkmalen und den Verfahrensmerkmalen zu unterscheiden. Für den Fachmann sind die bevorzugten vorrichtungs- und verfahrensmäßigen Merkmale aber dennoch ohne weiteres ersichtlich.

Konstruktiv einfach und verfahrensmäßig effektiv ist es, wenn die Strömungskanäle durch eine Mehrzahl von Lamellen gebildet werden. Die Lamellen können parallel zueinander angeordnet sein und bedarfsweise auch eine Wabenstruktur haben, welche die Strömungskanäle einschließt. Wabenstrukturen bilden eine große innere Oberfläche, was die Abscheidung begünstigen kann. Ganz grundsätzlich können die Strömungskanäle der Einfachheit halber parallel zueinander angeordnet sein.

Unabhängig von der Ausgestaltung der Einbauten können diese oder die Lamellen katalysatorbeschichtet sein, und zwar bedarfsweise mit nickelbasierten Katalysatoren. In diesem Zusammenhang können sich wegen der größeren spezifischen Oberfläche Einbauten mit einer Wabenstruktur anbieten. Die Einbauten können so auch zur Umsetzung von Gaskomponenten und/oder Teeren genutzt werden.

Um die Rückführung der am Boden der Strömungskanäle abgeschiedenen Kokspartikel entgegen die Strömungsrichtung der Gasphase zu verbessern, können am Boden der Strömungskanäle bzw. entlang der Lamellen Rinnen vorgesehen werden. Die Kokspartikel können so in einem Bereich sehr geringer Strömungsgeschwindigkeiten der Gasphase auch bei stark geneigten Strömungskanälen zurück in den Reaktionsraum geleitet werden.

Die Einbauten und/oder die Lamellen sind vorzugsweise mit einer Einrichtung verbunden, welche die Einbauten und/oder die Lamellen in Schwingung versetzen, um den Rücktransport der abgeschiedenen Kokspartikel in den Reaktionsraum zu unterstützen. Diese Einrichtung kann beispielsweise ein Schwingungsgeber sein, welcher den Einbauten und/oder den Lameelen eine Schwingung aufprägt. Hierbei kann letztlich auch die Trägheit der abgeschiedenen Kokspartikel ausgenutzt werden. Vorzugsweise ist dabei die Geschwindigkeit der Schwingung in Richtung der Gasströmung höher als in umgekehrter Richtung. Für den Rücktransport der abgeschiedenen Kokspartikel zurück in den Reaktionsraum kann es günstig sein, wenn die Vibration bzw. Schwingung der Einbauten und/oder der Lamellen im Wesentlichen parallel zu den Strömungskanälen sind. Unter einer Vibration wird vorliegend eine Schwingung mit sehr geringen Amplituden verstanden.

Um den Trennschnitt zwischen den in den Einbauten abgeschiedenen Partikeln und den nicht abgeschiedenen Partikeln einstellen zu können, kann die Neigung der Strömungskanäle im Betrieb verstellt werden. Hierzu sind entsprechende Einrichtungen vorgesehen. Die Einrichtungen können dabei die Neigung der Einbauten selbst und/oder der Lamellen verändern. Je mehr die Strömungskanäle auf diese Weise in Richtung der Horizontalen geneigt werden, desto mehr schwerer sedimentierende Partikel werden abgeschieden und in den Reaktionsraum zurückgeführt. Andersherum ist der Kohlenstoffanteil, der mit den Aschepartikeln ausgetragen wird, umso größer je steiler die Strömungskanäle ausgerichtet werden.

Zusätzlich kann auch die Länge und/oder der Querschnitt der Strömungskanäle variiert werden, um die Abscheidung und Rückführung der Kokspartikel in gewünschter Weise zu beeinflussen.
Um die Strömungsgeschwindigkeit der Gasphase in den Strömungskanälen zu reduzieren können die Strömungskanäle übereinander vorgesehen sein. Die Eingangsöffnung des einen Strömungskanals liegt dann in vertikaler Richtung unter der Eingangsöffnung des nächsten Strömungskanals. Dies kann in einfacher Weise dadurch erreicht werden, dass die Lamellen Ringförmig ausgebildet und, beispielsweise konzentrisch, übereinander angeordnet sind. Zudem kann vorgesehen sein, dass die Eingangsöffnungen der übereinander angeordneten Strömungskanäle in horizontaler Richtung gegeneinander versetzt sind, damit die über einen oberen Strömungskanal in den Reaktionsraum zurückgeführten Kokspartikel nicht unmittelbar anschließend in den darunterliegenden Strömungskanal eingetragen werden.

Das kohlenwasserstoffhaltige Gas und die Kokspartikel können der Einfachheit halber in einem mit dem Reaktor verbundenen Anlagenteil, vorzugsweise Pyrolysereaktor, gebildet werden. Die Kokspartikel und das kohlenwasserstoffhaltige Gas kann gemeinsam oder getrennt dem Reaktionsraum zugeführt werden. Im Falle einer Trennung von Gas und Kokspartikeln kann eine partielle Oxidation des Gases erfolgen. Durch die anschließende Vermischung von Gasphase und Kokspartikeln, wird die Temperatur durch endotherme Reaktionen, d.h. eine sogenannte chemische Quensche auf die gewünschte Temperatur abgekühlt.

Im Reaktionsraum können zur Verbesserung des Wärme- und Stoffaustauschs noch Partikel aus einem inerten Material vorgesehen sein. Es kann sich eine Wirbelschicht ausbilden, die im unteren Bereich eine stationäre Wirbelschicht darstellt. Diese wird aus den verhältnismäßig großen Kokspartikeln gebildet, die sich infolge der Schwerkraft am Boden des Reaktorraums absetzen. Darüber kann sich eine Art Wolke aus Kokspartikeln und bedarfsweise zusätzlich inerten Partikeln ausbilden. In dieser Wolke kann eine recht hohe Partikelkonzentration erreicht werden, weil die größeren Kokspartikel nicht ausgetragen, sondern durch die Einbauten abgeschieden und zurückgeführt werden.

Grundsätzlich können die Einbauten zwei oder mehr Gruppen von Strömungskanälen bereitstellen, die von der Gasphase nacheinander durchströmt werden und vorzugsweise übereinander angeordnet sind. Dann wird in der ersten Gruppe von Strömungskanälen ein erheblicher Anteil der Partikel abgeschieden und zurückgeführt. In der zweiten und jeder weiteren Gruppe von Strömungskanälen ist die Partikelkonzentration daher geringer, so dass eine höhere Trennschärfe zwischen schwerer sedimentierenden und leichter sedimentierenden Partikeln erreicht wird.

Besonders bevorzugt kann es sein, wenn der Reaktor zwei oder mehr in Reihe geschaltete Reaktionsräume aufweist. Der Einfachheit halber können die Reaktionsräume übereinander angeordnet sein, wobei der Gastrom und die in den Einbauten des vorhergehenden Reaktionsraums nicht abgeschiedenen Partikel gemeinsam in den nachfolgenden Reaktionsraum eintreten. Im Falle von mehreren in Reihe geschalteten Reaktionsräumen wird der Kohlenstoffanteil der Kokspartikel vorzugsweise nicht bereits im ersten Reaktionsraum umgesetzt. Vorzugsweise wird der Kohlenstoff der Kokspartikel nur zum Teil umgesetzt, und zwar soweit, bis die Größe der Kokspartikel soweit abgenommen hat, dass sie die Einbauten des ersten Reaktionsraums passieren, und in den nächsten Reaktionsraum gelangen. Dort findet dann eine Umsetzung des Kohlenstoffanteils der Kokspartikel statt, die vollständig oder unvollständig sein kann. Bei unvollständiger Umsetzung können die Kokspartikel in einem weiter nachgeschalteten Reaktionsraum weiter umgesetzt werden. Es kann letztlich eine sogenannte Reaktorkaskade erzeugt werden, wobei sich die Kokspartikel entsprechend ihrer Größe über die verschiedenen Reaktionsräume verteilen.

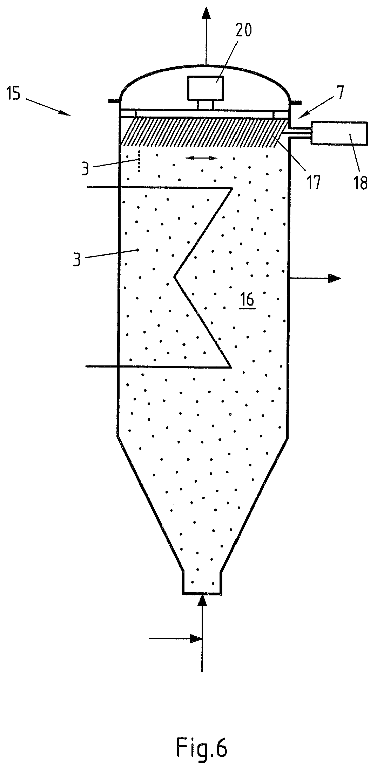

Die Erfindung wird nachfolgend anhand der Abbildung 6 näher erläutert. In der Zeichnung zeigt
- Fig. 1: einen nicht erfindungsgemässen Reaktor in einer vertikalen Schnittansicht,
- Fig. 2: ein Detail der Einbauten des Reaktors aus Fig. 1 in schematischer Darstellung,
- Fig. 3: ein erstes Ausführungsbeispiel von Einbauten des Reaktors aus Fig. 1 in schematischer Darstellung,
- Fig. 4: ein zweites Ausführungsbeispiel von Einbauten des Reaktors aus Fig. 1 in einer Schnittansicht,
- Fig. 5: ein drittes Ausführungsbeispiel von Einbauten des Reaktors aus Fig. 1 in einer Schnittansicht,
- Fig. 6: einen erfindungsgemäßen Reaktor in einer vertikalen Schnittansicht,
- Fig. 7: einen nicht erfindungsgemässen Reaktor in einer vertikalen Schnittansicht
- Fig. 8a-b: einen nicht erfindungsgemässen Reaktor in einer vertikalen Schnittansicht,
- Fig. 9: einen nicht erfindungsgemässen Reaktor in einer vertikalen Schnittansicht,
- Fig. 10: einen nicht erfindungsgemässen Reaktor in einer vertikalen Schnittansicht und
- Fig. 11: ein Detail eines nicht erfindungsgemässen Reaktors in einer vertikalen Schnittansicht.

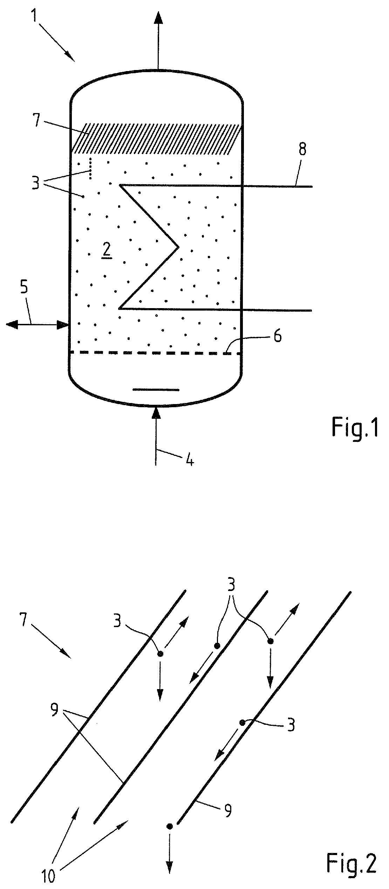

In der Fig. 1 ist ein Reaktor 1 zur Herstellung von Synthesegas aus Pyrolysegas dargestellt, der einen Reaktionsraum 2 umfasst, in dem feine Kokspartikel 3 in Form von Koksstaub enthalten sind. Über einen bodenseitigen Anschluss 4 und einen Düsenboden 6 gelangt Pyrolysegas in den Reaktionsraum 2. Die Kokspartikel 3 können über einen separaten seitlichen Zugang 5 zugeführt werden.

Um die im Pyrolysegas enthaltenen Teere und die Kokspartikel 3 in Synthesegas umzusetzen, herrschen im Reaktionsraum Temperaturen von 750°C bis 1200°C, vorzugsweise 800°C bis 1000°C, insbesondere 850°C bis 950°C. Zudem kann Wasserdampf vorhanden sein, der bedarfsweise zusammen mit dem Pyrolysegas in den Reaktionsraum 2 eingeblasen werden kann.

Im Reaktionsraum 2 bildet sich eine turbulente Mehrphasenströmung aus umfassend die Kokspartikel 3 sowie ggf. durch vollständige Umsetzung des Kohlenstoffs der Kokspartikel 3 gebildete Aschepartikel. An den Kokspartikeln 3 werden Teere der Gasphase katalytisch gespalten.

Am Boden des Reaktionsraums 2 können sich große Kokspartikel 3 absetzen und eine stationäre Wirbelschicht bilden. Durch Abrieb und Umsetzung des Kohlenstoffanteils der Kokspartikel 3 werden diese immer kleiner und treten somit irgendwann von der stationären Wirbelschicht in die Kokswolke darüber ein. Die Kokswolke umfassend Kokspartikeln 3 mit einer relativ breiten Partikelgrößenverteilung wird in einer turbulenten Strömung durchmischt und so in der Schwebe gehalten.

Von den Kokspartikeln 3 der Kokswolke gelangen einige Kokspartikel 3 in die am oberen Ende des Reaktionsraums 2 vorgesehenen Einbauten 7. Dort findet eine Trennung nach leichter und schwerer sedimentierenden Kokspartikeln 3 statt. Dies entspricht vorliegend im Wesentlichen einer Klassierung nach der Partikelgröße der Kokspartikel 3. Große Kokspartikel 3 werden abgeschieden und in den Reaktionsraum 2 zurückgeführt, wo sie durch die turbulente Strömung wieder verwirbelt werden. Der Kohlenstoffanteil der Kokspartikel 3 wird dann weiter zu Synthesegas umgesetzt. Die zurückgeführten Kokspartikel sind an einer Stelle schematisch in Form einer vertikalen Reihe von Kokspartikeln 3 symbolisiert.

Der Reaktionsraum 2 kann über eine darin vorgesehene und/oder den Reaktionsraum 2 umgebende Heizeinrichtung 8 beheizt werden, um dem endothermen Prozess der Synthesegasherstellung die benötige Wärme zur Verfügung zu stellen. Alternativ kann die Wärme auch durch Teiloxidation des kohlenwasserstoffhaltigen Gases mit Sauerstoff zugeführt werden.

Das Prinzip der Partikelabschneidung in den Einbauten 7 ist schematisch und beispielhaft in der Fig. 2 dargestellt. Die Einbauten 7 bestehen im Wesentlichen aus parallel zueinander angeordneten und zur Vertikalen geneigten Lamellen 9, etwa in Form von flachen Blechen. Die Lamellen 9 bilden zwischen einander Strömungskanäle 10, in welche die Gas- und Partikelströmung eintritt. Danach sinken die leichter sedimentierenden Kokspartikel 3, also die Partikel mit größerer Sinkgeschwindigkeit, auf die Böden der jeweiligen Strömungskanäle 10. Dort ist die Strömungsgeschwindigkeit der Gasströmung aufgrund von Reibung deutlich geringer als in der Mitte der Strömungskanäle 10. Die auf die abgesunkenen Kokspartikel 3 wirkende Gewichtskraft sorgt dann dafür, dass die Kokspartikel 3 entlang der Lamellen 9 zurück in den Reaktionsraum 2 rutschen. Auf die schwerer sedimentierenden Partikel 3, also die Kokspartikel 3 mit geringerer Sinkgeschwindigkeit, werden dagegen von der Gasströmung durch die Strömungskanäle 10 hindurchgetragen, ohne abgeschieden zu werden.

Gute Trennergebnisse werden beispielsweise erzielt, wenn die Strömungskanäle 10 wenigstens etwa 3 bis 10 mal so hoch sind wie die Durchmesser der größten Kokspartikel 3 in der Kokswolke unterhalb der Einbauten. Ansonsten besteht die Gefahr, dass die Strömungskanäle 10 verstopfen. Zudem nimmt die Abscheideleistung mit niedrigeren Strömungskanälen 10 und/oder abnehmendem hydraulischem Durchmesser zu. Die Trenngrenze verschiebt sich mit zunehmendem Winkel der Strömungskanäle 10 gegenüber der Vertikalen und/oder mit abnehmender Strömungsgeschwindigkeit der Gasphase in den Strömungskanälen 10 hin zu schwerer sedimentierenden, vorliegend insbesondere kleineren, Kokspartikeln 3.

Alternativ oder zusätzlich ist die Gasströmung in den Strömungskanälen 10 vorzugsweise laminar. So wird ein für die Abscheidung günstigeres Strömungsprofil in den Strömungskanälen 10 erhalten.

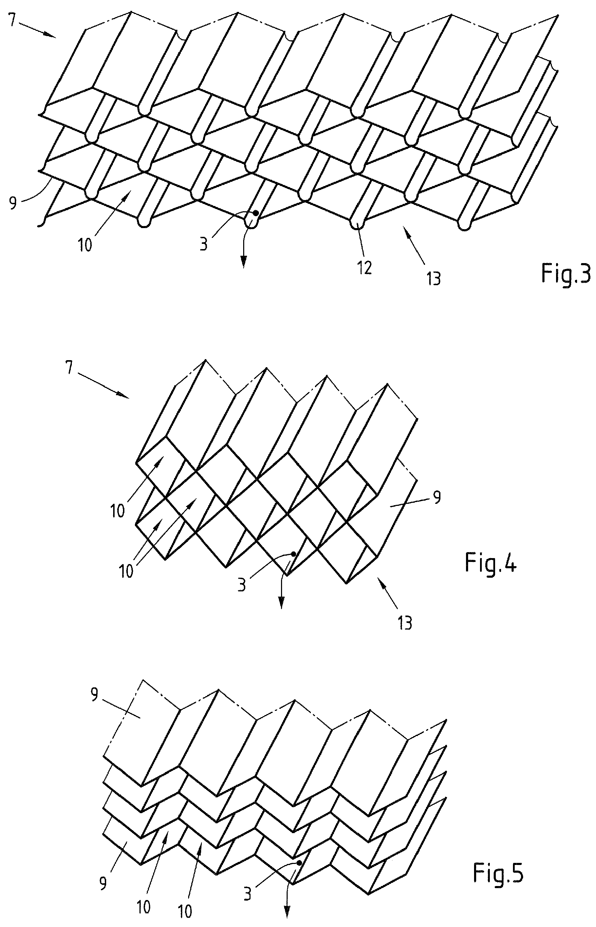

In der Fig. 3 sind Einbauten 7 mit Lamellen 9 dargestellt, bei denen sich Täler und Erhebungen quer zur Strömungsrichtung des Gases abwechseln und durch geneigte Flächen 13 voneinander getrennt sind. In den Tälern weisen die Lamellen 9 zudem sich in Strömungsrichtung erstreckende Rinnen 12 auf. Die abgeschiedenen Kokspartikel 3 gelangen aufgrund der geneigten Flächen 13 in die Rinnen 10, in denen die Strömungsgeschwindigkeit der Gasphase besonders gering ist, so dass die Kokspartikel 3 problemlos zurück in den Reaktionsraum 2 gleiten können. Die Lamellen 9 können, wie dies in der Fig. 3 dargestellt ist, gegenseitig aneinander anliegen oder voneinander beabstandet sein. Die Rinnen 12 können zudem grundsätzlich auch bei ebenen Lamellen 9 vorgesehen sein.

In der Fig. 4 sind Einbauten 7 mit einer Wabenstruktur 14 mit quadratische oder rechteckige Querschnitte aufweisenden Strömungskanälen 10 dargestellt. Die Wabenstruktur, kann durch keramische Monolithe gebildet werden, wie sie beispielsweise für Katalysatoren verwendet werden. Derartige Einbauten 7 sind besonders für hohe Partikelkonzentrationen und geringe Temperaturen geeignet. Die Strömungskanäle 10 sind so ausgerichtet, dass eine der Ecken des Querschnitts nach unten weist. So können sich die Kokspartikel 3 im entsprechenden Kantenbereich sammeln und zurück in den Reaktionsraum 2 rutschen.

Bei dem in der Fig. 5 dargestellten Einbauten 7 sind die Lamellen 9 gefaltet und bei den dargestellten und insoweit bevorzugten Einbauten 7 beabstandet sowie parallel zueinander angeordnet. Die Faltung der Lamellen 9 ist derart ausgebildet, dass sich Täler und Erhebungen quer zur Strömungsrichtung der Gasphase abwechseln. Entsprechende Bauformen bieten sich an, wenn die Neigung der Strömungskanäle 10 über entsprechende Einrichtungen veränderbar sein soll.

In der Fig. 6 ist ein Reaktor 15 umfassend einen Reaktionsraum 16 dargestellt, in dem teerhaltiges Pyrolysegas und Kokspartikel 3 zu einem im Wesentlichen teerfreien Synthesegas umgesetzt werden. Am oberen Ende des Reaktionsraums 16 befinden sich Einbauten 7 umfassend Lamellenbündel 17, wie sie beispielsweise in der Fig. 5 dargestellt sind. Die Lammelenbündel 17 bilden die Strömungskanäle, in den die leichter sedimentierenden Kokspartikel 3 abgeschieden und in den Reaktionsraum 16 zurückgeführt werden.

Dem Lammellenbündel 17 ist eine Einrichtung 18 zugeordnet, welche das Lamellenbündel 17 in Schwingungen versetzt, die vorzugsweise parallel zu den Strömungskanälen gerichtet sind. Die Kokspartikel 3 rutschen dann besser in den Reaktionsraum 16 zurück. Die Amplitude der Schwingungen ist zudem klein genug, um die Bildung von Wirbeln bzw. Turbulenzen in den Strömungskanälen zu vermeiden. Dem Lamellenbündel 17 ist zudem eine Einrichtung 20 zugeordnet, mit der die Lamellen 9 in ihrer Neigung verstellt werden können (siehe Doppelpfeil), um so die Strömungskanäle des Lamellenbündels 17 in ihrer Neigung zu verstellen. Bei dem dargestellten und insoweit bevorzugten Reaktor 15 sind alle Lamellen 9 des Lamellenbündels 17 schwenkbar ausgebildet und zwar um parallele Schwenkachsen.

Mit der Einrichtung, die die Lamellen 9 in Schwingungen versetzt, kann die Richtung der Schwingungen vorzugsweise derart variiert werden, dass die Schwingungen immer parallel zu den Strömungskanälen 10 des Lamellenbündels 17 verlaufen, auch wenn deren Neigung verändert wird. Die Einrichtungen 18,20, welche die Lamellen 9 in Schwingung versetzen und deren Neigung verstellen können gemeinsam oder auch einzeln vorgesehen sein.

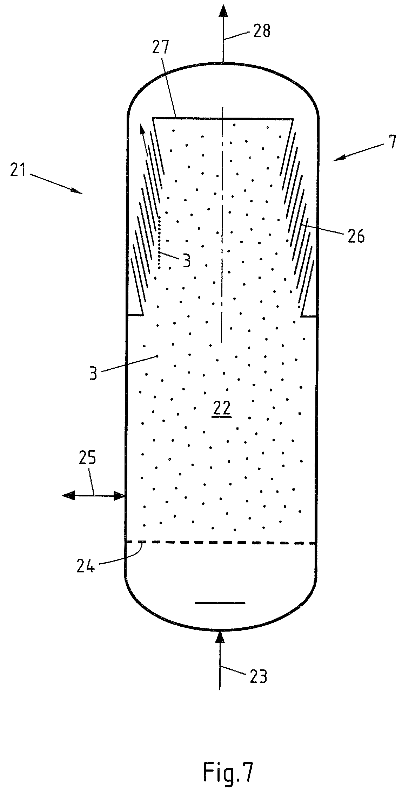

Der in der Fig. 7 dargestellte Reaktor 21 weist einen Reaktionsraum 22 auf, der nach oben von Einbauten 7 begrenzt wird, die konzentrisch übereinander angeordnete und zwischen einander Strömungskanäle ausbildende Lamellen 9 umfassen. Die Lamellen 9 können aus konischen Ringscheiben bzw. Tellern oder aus Monolithen bestehen, die umlaufend zur vertikalen Mittellinie des Reaktors 21 angeordnet sind.

Die Strömungskanäle sind im unteren Bereich des Lamellenbündels 17 weiter außen angeordnet als im oberen Bereich des Lamellenbündels 17. Bei dem dargestellten und insoweit bevorzugten Reaktor 21 beginnt jeder Strömungskanal weiter außen als der darüber angeordnete Strömungskanal, damit die in den Reaktionsraum 22 zurückgeführten Kokspartikel 3 nicht auf direkten Weg in den darunter liegenden Strömungskanal gelangen. Nach oben ist das Lamellenbündel 17 durch eine Platte 27 abgeschlossen.

Die Strömungskanäle zwischen den in der Fig. 7 dargestellten Lamellen 9 werden von innen nach außen durchströmt. Damit wird der Strömungsquerschnitt vom Eintritt der Strömungskanäle bis zum Austritt größer, so dass die Strömungsgeschwindigkeit der Gasphase abnimmt und mehr Kokspartikel 3 abgeschieden werden.

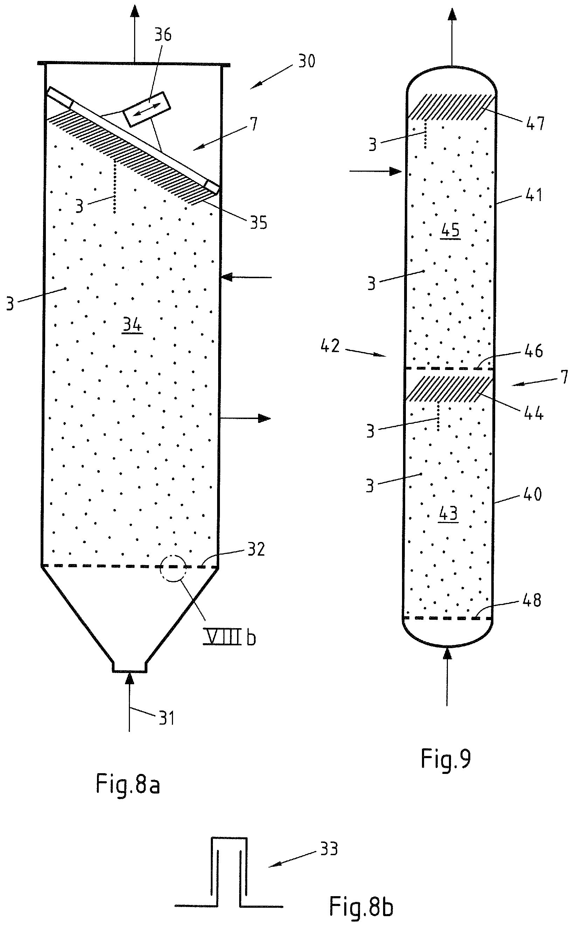

In der Fig. 8a ist ein Reaktor 30 mit einem insgesamt geneigten Lamellenbündel 35 dargestellt. Das Lamellenbündel 35 ist über eine geeignete Einrichtung 36 drehbar gelagert und in Schwingung versetzbar (siehe Doppelpfeil). Wenn die Schwingung in Richtung der Gasströmung höher als in der Gegenrichtung ist, können die Kokspartikel 3 selbst bei einer fast waagerechten Neigung der Strömungskanäle in den Reaktionsraum 34 zurück gelangen. Die Geschwindigkeit der Schwingung kann so eingestellt werden, dass die Trägheit der Kokspartikel 3 dafür sorgt, dass die Lamellen 9 sich in Strömungsrichtung des Gases unter den darauf liegenden Kokspartikeln 3 hinwegbewegen, während sich in die Gegenrichtung die Lamellen 9 und die Kokspartikel 3 gleichförmig bewegen, weil die Kokspartikel 3 ortsfest relativ zu den Lamellen 9 auf diesen liegen bleiben.

Das teerhaltige Pyrolysegas strömt von unten durch einen entsprechenden Anschluss 4 über einen Düsenboden 6 in den Reaktionsraum 34 ein. Der Düsenboden 6 ist in Form eines Glockenbodens mit Glocken 33 derart ausgebildet, dass die Kokspartikel 3 des Reaktionsraums 34 nicht durch die Glocken 33 nach unten strömen.

In der Fig. 9 ist ein Reaktor 40 in Form einer Reaktorkaskade mit zwei hintereinander geschalteten und übereinander angeordneten Reaktionsräumen 43,45 dargestellt. Das teerhaltige Pyrolysegas wird am Boden des unteren, ersten Reaktionsraums 43 eingeleitet. Die Kokspartikel 3 gelangen über einen seitlichen Anschluss 5 in den ersten Reaktionsraum 43. Das im ersten Reaktionsraum 43 teilweise von Teer entfrachtete Pyrolysegas strömt am oberen Ende des Reaktionsraums 43 in Lamellen 9 aufweisende Einbauten 7. Mit dem Gastrom werden auch Kokspartikel 3 in die Strömungskanäle zwischen den Lamellen 9 eingetragen. Die größeren Kokspartikel 3, ggf. mit einem hohen Kohlenstoffanteil, werden darin abgeschieden und in den Reaktionsraum 43 zurückgeführt. Die kleineren und ggf. einen geringeren Kohlenstoffanteil aufweisenden Kokspartikel 3 gelangen durch die Strömungskanäle der Einbauten 7 und einen Düsenboden 6 oder dergleichen in einen zweiten darüber angeordneten Reaktionsraum 43, in dem sich geringer mit Teer belastetes Pyrolysegas und kleinere Kokspartikel 3 befinden als im ersten Reaktionsraum 43.

Am oberen Ende des zweiten Reaktionsraums 45 tritt das Gas durch weitere Lamellen 9 aufweisende Einbauten 7 hindurch. Die Lamellen 9 können jedoch nur solche Kokspartikel 3 passieren, deren ursprünglicher Kohlenstoffanteil im Wesentlichen umgesetzt worden ist und die daher nunmehr recht kohlenstoffarm sind. Die Kokspartikel 3 mit einem höheren Kohlenstoffanteil werden in den von den Lamellen 9 gebildeten Strömungskanälen abgeschieden und in den zweiten Reaktionsraum 45 zurückgeführt, und zwar so lange bis der Kohlenstoffanteil dieser Kokspartikel 3 soweit gesunken ist, dass die zwischen den Lamellen 9 gebildeten Strömungskanäle passieren können. Durch die Kaskadierung und Aufteilung der Kokspartikel 3 auf verschiedene Reaktionsräume 43,45 kann ein besonders teerarmes Synthesegas produziert werden.

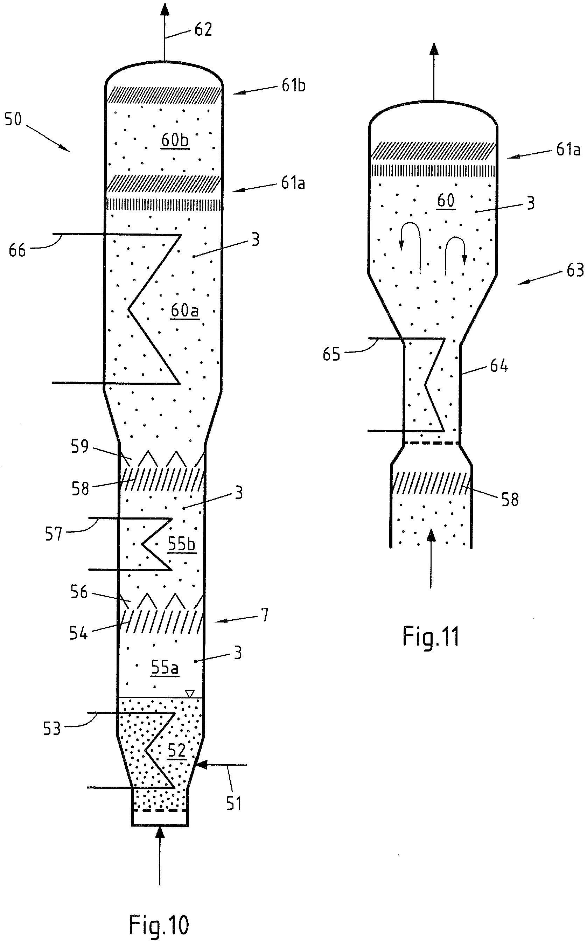

Fig. 10 zeigt eine Anlage 50 zur Herstellung von Synthesegas aus Biomasse. Der untere Teil der Anlage 50 ist ein Pyrolysereaktor 51, der eine stationäre Wirbelschicht 52 aufweist, deren unteres Ende der Düsenboden 6 ist und die den Pyrolysereaktor 51 etwa zur Hälfte ausfüllt. Die Wirbelschicht 52 wird beispielsweise von einem Wirbelgas aus Wasserdampf oder Luft fluidisiert. Das Wirbelgas wird über einen entsprechenden Anschluss 53 und den Düsenboden 6 in die Wirbelschicht 52 eingeblasen. Die Biomasse wird über einen weiteren Anschluss 54 seitlich zugeführt. Das den Pyrolysereaktor 51 verlassende Gas besteht bei der dargestellten und insoweit bevorzugten Anlage 50 aus Wirbelgas und Pyrolysegas. Die Biomassepartikel werden im Pyrolysereaktor 51 unter Wärmezufuhr zu Koks umgewandelt. Die Wirbelschicht 52 enthält inertes Material, das den Koks soweit zerkleinert, dass Kokspartikel 3 mit dem Gas aus der Wirbelschicht 52 ausgetragen und in darüber angeordnete Einbauten 7 gelangen. Diese weisen Strömungskanäle auf, die nur von hinreichend fein gemahlenen Kokspartikeln 3 passiert werden können. Die übrigen Kokspartikel 3 werden zur weiteren Verkohlung und Zerkleinerung in den Pyrolysereaktor 51 zurückgeführt. Dadurch kann die Kokspartikelkonzentration im Raum zwischen der Wirbelschicht 52 und den Einbauten 7 stark vergrößert werden.

Die hinreichend kleinen Kokspartikel 3 gelangen letztlich über das Lamellenbündel in den darüber angeordneten Reaktionsraum 55. Im Wesentlichen analog zu der in der Fig. 9 dargestellten Reaktorkaskade, werden die Kokspartikel 3 in dem dem Pyrolysereaktor 51 nachfolgenden Reaktionsraum 55 unter Wärmezuführung weiter umgesetzt. Das teerhaltige Pyrolysegas trifft dabei auf die glühenden Kokspartikeln 3 an denen sich der Teer katalytisch zersetzt. Zur weiteren Umsetzung kleinerer Kokspartikel 3 und zur weiteren Reduzierung des Teergehaltes der Gasphase kann ein weiterer Reaktionsraum 60 vorgesehen werden, der ebenfalls beheizt sein kann und indem die Kokspartikel 3 infolge einer Klassierung in den vorgeschalteten Einbauten 7 kleiner sind als in dem vorhergehenden Reaktionsraum 55.

Auf dieser Weise kann in jedem Reaktionsraum 55,60 eine hohe Kokspartikelkonzentration erhalten werden. Gleichzeitig Verweilen die Kokspartikel 3 viel länger in den Reaktionsräumen 55,60. Die Kokspartikel 3 stehen also länger zur katalytischen Teerspaltung und für den Umsatz des Kohlenstoffanteils der Kokspartikel 3 zur Verfügung.

Falls die Kokspartikel 3 beim Verlassen des oberen beheizten Reaktionsraums 60 nicht nur aus Asche bestehen, sondern noch einen erheblichen Kohlenstoffanteil enthalten, kann vorzugsweise ein weiterer unbeheizter Reaktionsraum 61 nachgeschaltet werden. Hier erfolgt eine weitere endotherme Umsetzung der Kokspartikel 3, weshalb sich das Gas abkühlt und der Wirkungsgrad erhöht werden kann, weil der Verlust an fühlbarer Wärme geringer ist.

In Fig. 11 ist eine alternative Ausgestaltung des zweiten Reaktionsraums 60 der Anlage 50 gemäß Fig. 10 dargestellt. Im alternativen Reaktionsraum 71 ist eine Heizung 14 in eine Wirbelschicht 72 eingebettet, die aus inertem Material, wie beispielsweise Sand, besteht. In einer Wirbelschicht 72 ist die Wärmeübertragung viel besser als in einem Gasraum. Die Fluidisierungsgeschwindigkeit der Wirbelschicht 72 ist hoch und beispielsweise im Grenzbereich von der stationären zur zirkulierenden Wirbelschicht. Eine klare Grenze der Wirbelschicht 72 ist daher kaum erkennbar. Große Mengen des inerten Materials stehen nun zur Wärmeübertragung an die Gasphase bereit. Das Gas überträgt dann die Wärme an die Kokspartikel 3. Die hohe Turbulenz ist durch die Pfeile symbolisiert. Der Querschnitt des Reaktionsraums 61 im bereich der Wirbelschicht 72 ist deutlich geringer als im Bereich des darüber angeordneten, eine Kokswolke enthaltenden Raums. Die Zerkleinerung der Kokspartikel 3 durch die Wirbelschicht 72 ist für die Umsetzung von Kokspartikel 3 aus Biomasse vorteilhaft, weil die Reaktionsgeschwindigkeit steigt.

## Patentansprüche

1. Reaktor (1,15,21,30,40,50) zur Herstellung von Synthesegas aus gasförmigen Kohlenwasserstoffen, insbesondere Pyrolysegas, und Kokspartikeln (3), umfassend wenigstens einen Reaktionsraum (2,22,34,43,45, 55,60,61,71), wobei am oberen Ende des Reaktionsraums (2,22,34,43,45,55,60, 61,71) zur Vertikalen geneigte Strömungskanäle (10) bereitstellende Einbauten (7) zur Abscheidung und Rückführung von Kokspartikeln (3) in den Reaktionsraum (2,22,34,43,45, 55,60,61,71) unter Ausnutzung der Schwerkraft vorgesehen sind,
**dadurch gekennzeichnet, dass** Einrichtungen (18,36) zum Verstellen der Neigung der Einbauten (7) und/oder der Strömungskanäle (10) vorgesehen sind.

2. Reaktor nach Anspruch 1,
**dadurch gekennzeichnet, dass** die Einbauten (7) eine Mehrzahl von, vorzugsweise parallel zueinander angeordneten, die Strömungskanäle (10) ausbildenden Lamellen (9) umfassen.

3. Reaktor nach Anspruch 1 oder 2,
**dadurch gekennzeichnet, dass** die Einbauten (7) eine die Strömungskanäle (10) bildende Wabenstruktur (14) aufweist.

4. Reaktor nach einem der Ansprüche 1 bis 3,
**dadurch gekennzeichnet, dass** die Strömungskanäle (10) katalysatorbeschichtet sind.

5. Reaktor nach einem der Ansprüche 1 bis 4,
**dadurch gekennzeichnet, dass** am Boden der Strömungskanäle (10) Rinnen (12) zur Rückführung der Kokspartikel (3) in den Reaktionsraum (2,22,34,43,45, 55,60,61,71) vorgesehen sind.

6. Reaktor nach einem der Ansprüche 1 bis 5,
**dadurch gekennzeichnet, dass** die Einbauten (7), die Lamellen (9) und/oder die Wabenstruktur (14) in Schwingung versetzende Einrichtungen (20,36) vorgesehen sind.

7. Reaktor nach einem der Ansprüche 1 bis 6,
**dadurch gekennzeichnet, dass** Einrichtungen (18,36) zum Verstellen der Neigung der Lamellen (9) und/oder der Wabenstruktur (14) vorgesehen sind.

8. Reaktor nach einem der Ansprüche 1 bis 7,
**dadurch gekennzeichnet, dass** die Strömungskanäle (10) übereinander angeordnet sind und, vorzugsweise, durch konische, eine mittlere Öffnung aufweisende Teller gebildet werden.

9. Reaktor nach einem der Ansprüche 1 bis 8,
**dadurch gekennzeichnet, dass** zwei oder mehr Reaktionsräume (43,45,55,60,61,71) in Reihe geschaltet sind und dass am oberen Ende der jeweiligen Reaktionsräume (43,45,55,60,61,71) Einbauten (7) zur Abscheidung und Rückführung von Kokspartikeln (3) in den jeweiligen Reaktionsraum (43,45,55,60,61,71) vorgesehen sind.

10. Reaktor nach einem der Ansprüche 1 bis 9,
**dadurch gekennzeichnet, dass** dem Reaktionsraum (55) ein Pyrolysegasreaktor (51) derart vorgeschaltet ist, dass aus dem Pyrolysegasreaktor (51) das kohlenwasserstoffhaltige Gas und die Kokspartikel (3) in der Reaktionsraum (55) geleitet werden.

11. Verfahren zur Herstellung von Synthesegas aus gasförmigen Kohlenwasserstoffen, insbesondere Pyrolysegas, und Kokspartikeln (3) unter Verwendung wenigstens eines Reaktors (1,15,21,30,40,50) nach einem der Ansprüche 1 bis 10,
- bei dem in einem Reaktionsraum (2,22,34,43,45, 55,60,61,71) eine Mehrphasenströmung umfassend die gasförmigen Kohlenwasserstoffe und die Kokspartikel (3) erzeugt wird,
- bei dem die Mehrphasenströmung am oberen Ende des Reaktionsraums (2,22,34,43,45, 55,60,61,71) in die Strömungskanäle (10) von Einbauten (7) strömt und
- bei dem Kokspartikel (3) unter Ausnutzung der Schwerkraft in den Strömungskanälen (10) teilweise abgeschieden und in den Reaktionsraum (2,22,34,43,45, 55,60,61,71) zurückgeführt werden.

12. Verfahren nach Anspruch 11,
bei dem die Einbauten (7), die Lamellen (9) und/oder die Wabenstruktur (14) zur verbesserten Rückführung der Kokspartikel (3) in Schwingung und/oder Vibration versetzt werden.

13. Verfahren nach Anspruch 11 oder 12,
bei dem die Neigung der Einbauten (7), der Lamellen (9), der Wabenstruktur (14) und/oder der Strömungskanäle (10) im Betrieb verstellt wird.

14. Verfahren nach einem der Ansprüche 11 bis 13,
bei dem Teere an Oberflächen der Einbauten (7) katalytisch gespalten werden.

15. Verfahren nach einem der Ansprüche 11 bis 14,
bei dem das kohlenwasserstoffhaltige Gas, vorzugsweise Pyrolysegas, und die Kokspartikel in einem dem Reaktionsraum (55) unmittelbar vorgeschalteten Pyrolysereaktor (51) erzeugt und dem Reaktionsraum zugeführt (55) werden.

## Claims

1. Reactor (1, 15, 21, 30, 40, 50) for producing synthesis gas from gaseous hydrocarbons, in particular pyrolysis gas, and coke particles (3), comprising at least one reaction space (2, 22, 34, 43, 45, 55, 60, 61, 71), wherein interior components (7), providing flow channels (10) inclined with respect to the vertical, for deposition and recycling of coke particles (3) into the reaction space (2, 22, 34, 43, 45, 55, 60, 61, 71) by using the force of gravity are provided at the upper end of the reaction space (2, 22, 34, 43, 45, 55, 60, 61, 71), **characterised in that** devices (18, 36) for adjusting the inclination of the interior components (7) and/or of the flow channels (10) are provided.

2. Reactor according to Claim 1, **characterised in that** the interior components (7) comprise a plurality of lamellae (9), preferably arranged parallel to one another, forming the flow channels (10).

3. Reactor according to Claim 1 or 2, **characterised in that** the interior components (7) have a honeycomb structure (14) forming the flow channels (10).

4. Reactor according to any one of Claims 1 to 3, **characterised in that** the flow channels (10) are coated with catalyst.

5. Reactor according to any one of Claims 1 to 4, **characterised in that** troughs (12) for recycling the coke particles (3) into the reaction space (2, 22, 34, 43, 45, 55, 60, 61, 71) are provided at the bottom of the flow channels (10).

6. Reactor according to any one of Claims 1 to 5, **characterised in that** devices (20, 36) which set the interior components (7), the lamellae (9) and/or the honeycomb structure (14) in oscillation are provided.

7. Reactor according to any one of Claims 1 to 6, **characterised in that** devices (18, 36) are provided for adjusting the inclination of the lamellae (9) and/or of the honeycomb structure (14).

8. Reactor according to any one of Claims 1 to 7, **characterised in that** the flow channels (10) are arranged above one another and are preferably formed by conical plates having a central opening.

9. Reactor according to any one of Claims 1 to 8, **characterised in that** two or more reaction spaces (43, 45, 55, 60, 61, 71) are connected in series, and **in that** interior components (7) for deposition and recycling of coke particles (3) into the respective reaction space (43, 45, 55, 60, 61, 71) are provided at the upper end of the respective reaction spaces (43, 45, 55, 60, 61, 71).

10. Reactor according to one of Claims 1 to 9, **characterised in that** the reaction space (55) is preceded by a pyrolysis gas reactor (51), in such a way that the hydrocarbon-containing gas and the coke particles (3) are fed into the reaction space (55) from the pyrolysis gas reactor (51).

11. Method for producing synthesis gas from gaseous hydrocarbons, in particular pyrolysis gas, and coke particles (3) by using at least one reactor (1, 15, 21, 30, 40, 50) according to any one of Claims 1 to 10,
- wherein a multiphase flow comprising the gaseous hydrocarbons and the coke particles (3) is generated in a reaction space (2, 22, 34, 43, 45, 55, 60, 61, 71),
- wherein the multiphase flow flows into the flow channels (10) of interior components (7) at the upper end of the reaction space (2, 22, 34, 43, 45, 55, 60, 61, 71), and
- wherein the coke particles (3) are partially deposited and fed back into the reaction space (2, 22, 34, 43, 45, 55, 60, 61, 71) by using the force of gravity.

12. Method according to Claim 11, wherein the interior components (7), the lamellae (9) and/or the honeycomb structure (14) are set in oscillation and/or vibration for better recycling of the coke particles (3).

13. Method according to Claim 11 or 12, wherein the inclination of the interior components (7), of the lamellae (9), of the honeycomb structure (14) and/or of the flow channels (10) is adjusted during operation.

14. Method according to any one of Claims 11 to 13, wherein tars are catalytically cracked on surfaces of the interior components (7).

15. Method according to any one of Claims 11 to 14, wherein the hydrocarbon-containing gas, preferably pyrolysis gas, and the coke particles are produced in a pyrolysis reactor (51) immediately preceding the reaction space (55) and are fed to the reaction space (55).

## Revendications

1. Réacteur (1, 15, 21, 30, 40, 50) pour la production de gaz de synthèse à partir d'hydrocarbures gazeux, en particulier de gaz de pyrolyse, et de particules de coke (3), comprenant au moins une chambre de réaction (2, 22, 34, 43, 45, 55, 60, 61, 71), où l'on prévoit au niveau de l'extrémité supérieure de la chambre de réaction (2, 22, 34, 43, 45, 55, 60, 61, 71) des inserts (7) constituant des canaux d'écoulement (10) inclinés par rapport à la verticale afin de séparer et ramener les particules de coke (3) dans la chambre de réaction (2, 22, 34, 43, 45, 55, 60, 61, 71) sous l'effet de la gravité, **caractérisé en ce que** l'on prévoit des équipements (18, 36) pour ajuster l'inclinaison des inserts (7) et/ou des canaux d'écoulement (10).

2. Réacteur selon la revendication 1, **caractérisé en ce que** les inserts (7) comportent une multitude de lamelles (9) formant les canaux d'écoulement (10) qui sont agencées, de préférence, parallèlement l'une par rapport à l'autre.

3. Réacteur selon la revendication 1 ou 2, **caractérisé en ce que** les inserts (7) présentent une structure en nid d'abeilles (14) formant les canaux d'écoulement (10).

4. Réacteur selon une des revendications de 1 à 3, **caractérisé en ce que** les canaux d'écoulement (10) sont revêtus d'un catalyseur.

5. Réacteur selon une des revendications de 1 à 4, **caractérisé en ce que** l'on prévoit sur le fond des canaux d'écoulement (10) des gorges (12) afin de ramener les particules de coke (3) dans la chambre de réaction (2, 22, 34, 43, 45, 55, 60, 61, 71).

6. Réacteur selon une des revendications de 1 à 5, **caractérisé en ce que** les inserts (7), les lamelles (9) et/ou la structure en nid d'abeilles (14) sont prévus dans des équipements destinés à être mis en vibration (20, 36).

7. Réacteur selon une des revendications de 1 à 6, **caractérisé en ce que** l'on prévoit des équipements (18, 36) pour ajuster l'inclinaison des lamelles (9) et/ou de la structure en nid d'abeilles (14).

8. Réacteur selon une des revendications de 1 à 7, **caractérisé en ce que** les canaux d'écoulement (10) sont agencés l'un au-dessus de l'autre et sont, de préférence, formés par des plateaux coniques pourvus d'une ouverture centrale.

9. Réacteur selon une des revendications de 1 à 8, **caractérisé en ce que** deux ou plusieurs chambres de réaction (43, 45, 55, 60, 61, 71) sont connectées en série et que l'on prévoit au niveau de l'extrémité supérieure des chambres de réactions respectives (43, 45, 55, 60, 61, 71) des inserts (7) afin de séparer et ramener les particules de coke (3) dans les respectives chambres de réaction (43, 45, 55, 60, 61, 71).

10. Réacteur selon une des revendications de 1 à 9, **caractérisé en ce qu'**un réacteur à gaz de pyrolyse est placé en amont de la chambre de réaction (55) (51) de telle sorte que les hydrocarbures gazeux et les particules de coke (3) en provenance du réacteur à gaz de pyrolyse (51) sont acheminés dans la chambre de réaction (55).

11. Procédé pour la production de gaz de synthèse à partir d'hydrocarbures gazeux, en particulier de gaz de pyrolyse, et de particules de coke (3) en utilisant au moins un réacteur (1, 15, 21, 30, 40, 50) selon une des revendications de 1 à 10,
- lors duquel un écoulement multiphasique comportant les hydrocarbures gazeux et les particules de coke (3) est produit dans une chambre de réaction (2, 22, 34, 43, 45, 55, 60, 61, 71),
- lors duquel l'écoulement multiphasique au niveau de l'extrémité supérieure de la chambre de réaction (2, 22, 34, 43, 45, 55, 60, 61, 71) coule dans les canaux d'écoulement (10) des inserts (7) et
- lors duquel des particules de coke (3) se séparent parfois, sous l'effet de la gravité, dans les canaux d'écoulement (10) et sont ramenées dans la chambre de réaction (2, 22, 34, 43, 45, 55, 60, 61, 71).

12. Procédé selon la revendication 11, lors duquel les inserts (7), les lamelles (9) et/ou la structure en nid d'abeilles (14) peuvent être entraînés en oscillation et/ou en vibration afin de mieux ramener les particules de coke (3).

13. Procédé selon la revendication 11 ou 12, lors duquel l'inclinaison des inserts (7), des lamelles (9), de la structure en nid d'abeilles (14) et/ou des canaux d'écoulement (10) est réglée en fonctionnement.

14. Procédé selon une des revendications de 11 à 13, lors duquel le goudron peut être craqué catalytiquement sur la surface des inserts (7).

15. Procédé selon une des revendications de 11 à 14, lors duquel les hydrocarbures gazeux, de préférence des gaz de pyrolyse, et les particules de coke sont produits dans un réacteur à gaz de pyrolyse (51) situé immédiatement en amont de la chambre de réaction (55) et sont ramenés dans la chambre de réaction (55).
